# EUROPEAN PATENT APPLICATION

(11) **EP 3 252 235 A1**
(43) Date of publication of application: **06.12.2017**
(21) Application number: 17172053.5
(22) Date of filing: 19.05.2017
(51) Int. Cl.: E02D 17/10

(54) **TRENCH COVER**

(30) Priority: 31.05.2016 GB 201609540; 16.09.2016 GB 201616284
(71) Applicant: Duratex UK Rubber & Plastics Ltd, Abingdon, Oxfordshire OX14 4JW (GB)
(72) Inventor: LARSSON, Dag, Abingdon, Oxfordshire OX14 4JW (GB)
(74) Representative: Mansfield, Peter Turquand

(57) **Abstract**

A trench cover (10) consists of a length of flexible resilient material of uniform cross-sectional shape, defining a central bridge element (12) and edge strips (13) that together define an upper surface, and also defining two sidewalls (16) projecting from the underside, one at either side of the central bridge element (12). The sidewalls (16) have an outer surface adapted to abut a side of a trench (20), but the distance between the outer surfaces of the sidewalls (16) is greater than the width of the trench (20) when the trench cover (10) is in an uncompressed state. The material may be a thermoplastic elastomer which may be extruded into the required shape. The trench cover (10) is installed in the trench (20) by squeezing the sidewalls (16) together and bending the central bridge element (12) upward, and this upward bend ensures the central bridge element (12) can withstand the imposed loads during use.

## Description

The present invention relates to a cover for a trench, particularly but not exclusively for temporary use, for example for the time between creating the trench and refilling it, so that the trench does not form an obstacle or impediment to vehicles or people.

Where the trenches are formed in a footpath or road surface it is necessary to protect against the risk of injury or damage resulting from people or vehicles falling into the trench, or damaging the wall of the trench. In some situations it is appropriate to erect a barrier around the trench to prevent people from entering the vicinity of the trench, but this is not always acceptable, for example where the trench is in a pavement along which people need to walk to access a shop, and in such cases it is known to provide a cover over the trench, the cover being suitable for taking the weight of people or vehicles as the case may be. The use of temporary trench covering elements such as wooden planks for this purpose is known, the use of metal covering elements that can interlink is described in US 6 722 814 (Byrne), while the use of moulded plastic trench covers is described in US 8 956 073 (Whiteley). Such trench covering elements are acceptable where only a limited length of trench has to be covered, but would be unsuitable when dealing with a trench for example of length more than 100 m, as they would be costly in terms of labour and materials.

Currently efforts are being made to provide optical fibre connections to houses and offices throughout the United Kingdom, to provide high-speed Internet access. This necessitates the installation of a new cable network across the country, generally following existing roads, with the intention of eventually reaching every property. To increase the speed of deployment and to reduce the overall cost, the trenches for this purpose are now typically being dug using a micro-trencher, which is a vehicle that cuts a comparatively narrow slot or trench in the ground which is just wide enough to house the ducts or cables, typically using a rotary cutting disc. The resulting micro-trench would typically be of width between 30 mm and 100 mm, and might be of depth 300 mm. This is far smaller than a trench dug using hydraulic excavators or by other traditional methods, and not only is the use of micro-trenching much faster than traditional trench digging, but greatly reduces the amount of excavated material, and hence the amount of infill material required subsequently to reinstate the ground. Consequently a small workforce using a micro-trencher can for example form a micro-trench of length up to 500 m in a day. Conventional methods for erecting barriers or providing temporary trench covering elements over such a long distance on a daily basis would be expensive and impractical. A further problem encountered with such micro-trenches is that the exact width of the trench may vary, typically by up to 15 mm, as a result of variations in ground conditions. An improved trench cover to resolve these issues would therefore be advantageous.

According to the present invention there is provided a trench cover to cover a trench, the trench cover comprising a length of flexible resilient material having a substantially constant cross-sectional shape along its length, the shape defining a central bridge element and edge strips that together define an upper surface, and the shape also defining two sidewalls projecting from the underside, one at either side of the central bridge element, the sidewalls having an outer surface adapted to abut a side of the trench, and the separation between the outer surfaces of the sidewalls when the trench cover is in an uncompressed state being at least as much as the width of the trench.

The thickness of the central bridge element may gradually vary across its width, being least at the middle of the trench cover, and increasing to the sidewalls. For example the variation in thickness may be such that the underside of the central bridge element defines a concave curve. Alternatively the variation may be a linear decrease down to a minimum thickness portion at the middle of the trench cover. The upper surface may be substantially smooth, although it may define small ridges, less than 1 mm high, to provide a nonslip walking surface, or it may define larger ridges, more than 1 mm high. Such ridges may be spaced apart by non-ridged surface portions, or the ridges may cover substantially the whole of the upper surface.

The outer surfaces of the sidewalls may define grooves and ridges, for example defining a zigzag or sawtooth shape. The ridges and grooves may be of uniform shape, or alternatively the ridges and grooves may vary in shape across the outer surface of the sidewalls, for example such that the ridges nearer the underside of the edge strips are more flexible than those further from the underside.

The distance between outer surfaces of the sidewalls is greater than or equal to the width of the trench, so the sidewalls must be squeezed together to be inserted into the trench. The outer surfaces of the sidewalls, in the unstressed state, may be vertical or splayed out from the vertical, preferably by no more than 30°, preferably between 5° and 25°. This has the effect that those surfaces are closer to the vertical when the sidewalls are squeezed together for insertion into the trench.

The material of which the trench cover is made must be sufficiently flexible that the central bridge element can be bent upwards, so that the separation between the outer surfaces of the sidewalls becomes less than the width of the trench, so the trench cover can be inserted into the trench. The sidewalls then abut the sides of the trench and so prevent the trench cover from moving sideways relative to the trench; the edge strips then rest on the ground on either side of the trench, and the central bridge element extends across the trench. Although the material is flexible, the upward curved shape of the central bridge element ensures that the central bridge element is sufficiently strong to support the loads for example of pedestrians or vehicles moving over the trench cover.

The material is preferably a thermoplastic elastomer, which can be extruded into the required shape. Such materials are for example commercially used in glazing gaskets. They consist of copolymers or a physical mix of polymers combining materials with both thermoplastic and elastomeric properties. One suitable material is a blend of ethylene propylene rubber, with polypropylene.

The edge strips rest on the ground in use, and to avoid presenting a trip hazard the edge strips may taper in thickness to form a very thin edge, for example less than 2 mm thick or less than 1 mm thick. These features may be omitted where the trench cover only has to contend with vehicles rather than pedestrians. The edge strips may taper substantially uniformly, or alternatively they may have a first tapering section followed by an edge portion of substantially uniform thickness.

It will be appreciated that the length of the trench cover corresponds to the length of the trench that can be covered and protected. The length may for example be 3 m, 10 m, 25 m or 50 m; and the trench cover may be stored on a drum before use. For covering and protecting a longer trench such trench covers can be used end to end, and it is beneficial to link the ends of successive trench covers together. In one example the trench cover defines a hole or aperture, preferably near the top of each sidewall, into which a dowel can be inserted, so that the ends of successive trench covers can be linked together by the dowels. Indeed there may be more than one such hole or aperture, to alter the lateral flexibility.

The flexibility of the material is preferably such that it can be bent to follow a curved trench, as long as the curvature of the trench is not too great.

The invention will now be further and more particularly described, by way of example only, and with reference to the accompanying drawings in which:
Figure 1 shows a cross-sectional view of a trench cover of the invention in an initial, unstressed state;
Figure 2 shows a cross-sectional view of the trench cover of Figure 1 in use;
Figure 3 shows a perspective view of two trench covers being joined end to end;
Figure 4 shows an end view of an alternative trench cover in an initial unstressed state;
Figure 5 shows an end view of the trench cover of figure 4 when in use;
Figure 6 shows an end view of another alternative trench cover in an initial unstressed state;
Figure 7 shows an end view of another alternative trench cover when in use; and
Figure 8 shows an end view of the trench cover of figure 7 when in use in a narrower trench.

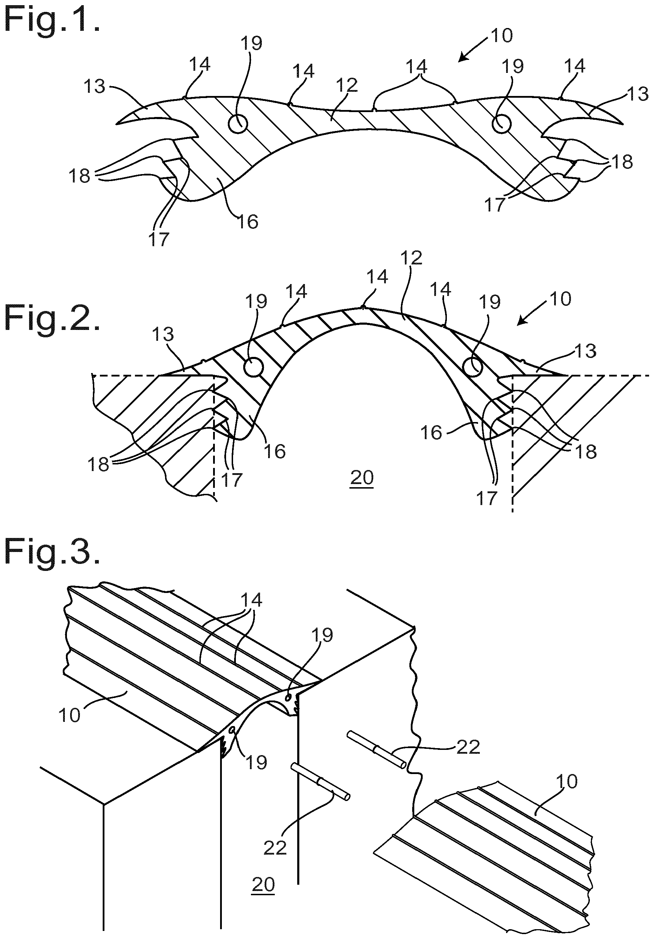

Referring now to figure 1, a trench cover 10 consists of a length of flexible resilient material of substantially constant cross-sectional shape along its length, being formed by extrusion from a thermoplastic elastomer. A suitable material for this purpose is a blend of ethylene propylene rubber and polypropylene, and for example this may have a relative density of 1.13 and a hardness of 65° Shore A, and a tensile strength of 5.5 MPa. The shape defines a central bridge element 12 and edge strips 13 that together define a substantially smooth upper surface with small longitudinal ridges 14 to provide a non-slip feature; these may for example be rectangular or semicircular ridges of height 0.5 mm. By way of example the thickness (top to bottom) at the centre of the central bridge element 12 may be 4 mm, while the edge strips 13 may taper from say 6 mm down to 1 mm, and be of width 20 mm.

The trench cover 10 also defines two sidewalls 16 that project from the underside, one at either side of the central bridge element 12. The sidewalls 16 in this situation are splayed apart, so that the underside of the central bridge element 12 and the adjacent opposed faces of the sidewalls 16 define a smooth concave curve. The outer faces of the sidewalls define three grooves 17 and three triangular teeth 18. A circular hole 19 is defined near the top of each sidewall 16.

Referring now to figure 2, when the trench cover 10 is installed in a trench 20 (indicated in broken lines) the sidewalls 16 are squeezed together until the separation between the outer faces of the sidewalls 16 matches the width of the trench 20, and the trench cover 10 is pushed into the trench 20 so that the teeth 18 abut the sidewall of the trench 20 and the edge strips 13 are bent slightly upward to rest on the ground adjacent to the trench 20. This has the effect that the central bridge element 12 is bent upward so the upper surface of the central bridge element 12 is convex.

In this state the trench cover 10 can withstand the loads from people or vehicles passing over the trench cover 10 and so over the trench 20. The thin outer edges of the edge strips 13 reduces the risk of a pedestrian tripping on the trench cover 10.

It will be appreciated that the width of the trench cover 10 must be matched to the width of the trench 20. For example the trench cover shown in figure 1 is about 100 mm wide between the tips of the triangular teeth 18; in the squeezed state shown in figure 2 the width between the tips of the triangular teeth is about 85 mm. However, the resilience of the material is such that there can be variation in the width of the trench 20, so that for example the trench cover 10 would be suitable for covering trenches 20 of width between about 70 mm and 85 mm. Indeed the trench 20 may be of slightly varying width along its length, which would lead to the degree of curvature of the central bridge element 12 varying along the length of the trench 20.

In practice the trench cover 10 may be installed in the trench 20 by first inserting one sidewall 16, then squeezing the trench cover 10 so that the other sidewall 16 can enter the trench, and then forcing the trench cover 10 into the operating position shown in figure 2, for example by treading on it.

The trench cover 10 may for example be of length 5 m, and to cover a length of trench 20 greater than that it is necessary to arrange a number of trench covers 10 end to end. As illustrated in figure 3, to which reference is now made, it has been found to be beneficial in this case to interconnect the abutting ends of two adjacent trench covers 10 by inserting dowels 22 into the holes 19. Without such a linkage, there is a risk that a load exerted on the central bridge element 12 near the end of a trench cover 10 may cause the end of the trench cover 10 to bend up out of the trench 20; the linkage provided by the dowels 22 avoids this risk.

Referring again to figures 1 and 2 it will be appreciated that the central bridge element 12 is thinnest at the centre, and because of the smooth concave curve on the underside leading to the sidewalls 16, the thickness gradually increases away from the centre of the central bridge element 12. The comparatively thin wall forming the centre of the central bridge element 12 allows bending of the central bridge element 12 and so of the trench cover 10 to take place to form the shape shown in figure 2. The initial width between the outer surfaces of the sidewalls 16 is greater than the width of the trench, so the sidewalls 16 must be squeezed together during insertion of the trench cover 10 into the trench 20, and this squeezing of the sidewalls 16 together bends the central bridge element 12 upward. The increased curvature (that is to say the smaller radius of curvature) of the central bridge element 12 increases its rigidity, so enabling the central bridge element 12 to carry the required loads when vehicles or pedestrians cross the trench cover 10.

The sawtooth shape of the triangular teeth 18 provides grip against the inside wall of the trench 20, so providing additional support to the trench cover 10. The flexibility of these teeth 18 also assists in allowing the trench cover 10 to adapt to variations in the width of a trench 20.

As a general rule micro-trenches are of width between 30 mm and 100 mm, and trench covers of the invention can be formed that are suitable for such widths. As described above the width of the trench cover 10 between the outer surfaces of the sidewalls 16 (measured to the tips of the triangular teeth 18) is about 100 mm in the unstressed state, and this is suitable for covering trenches of width between about 70 mm and 85 mm. Trench covers of different sizes can be made by scaling up or down, so for example a larger trench cover in which the width between outer surfaces of the sidewall 16 (measured to the tips of the triangular teeth 18) in the unstressed state is 120 mm would be suitable for covering trenches of width between about 85 mm and 100 mm; while a smaller trench cover in which the width in the unstressed state is 42 mm might be suitable for trenches of width between about 30 mm and 35 mm.

It will thus be appreciated that the trench cover 10 enables a micro-trench to be safely and easily covered. The trench cover 10 is sufficiently flexible to be able to follow a micro-trench that follows a curved path. The trench covers 10 can be easily removed when the trench is to be filled in, so they can be re-used. Furthermore the thermoplastic material of which they are made can be readily recycled if the trench covers 10 become worn.

It will be also appreciated that the trench cover 10 described above is provided to illustrate the invention, and that it can be modified in a number of ways while remaining within the scope of the invention as defined by the claims. For example the relative proportions of the edge strips 13, the sidewalls 16 and the central bridge element 12 may differ from those shown in the figures; the number and shape of the flexible teeth 18 may differ from that shown, and as indicated above the dimensions may differ to suit different sizes of trench.

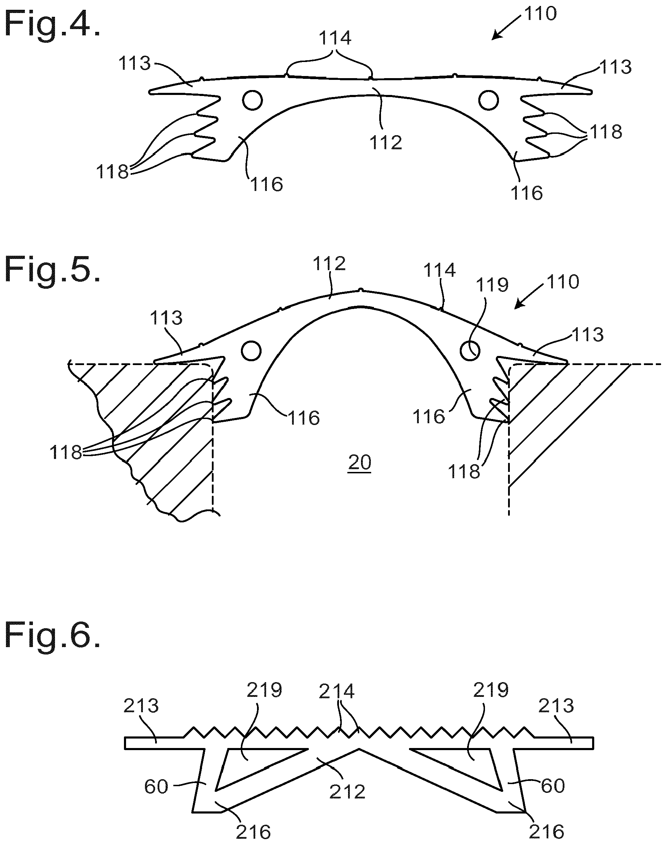

So, referring now to figures 4 and 5, there is shown an alternative trench cover 110, the features of which are substantially the same as those of the trench cover 10, being referred to by the same reference numerals preceded by a 1. In particular it comprises a central bridge element 112 and edge strips 113 to define the upper surface, and also comprises two sidewalls 116 that project from the underside, one at either side of the central bridge element 112. The outer face of each sidewall defines three triangular teeth 118.

The trench cover 110 can be used to cover a trench 20 in the same way as described above, by squeezing the sidewalls 116 together until the separation between their outer faces matches the width of the trench 20. The trench cover 110 is pushed into the trench 20 so that the teeth 118 abut the side wall of the trench 20 and the edge strips 113 are bent slightly upwards to rest on the ground adjacent to the trench 20. Hence the central bridge element 112 is bent upward so the upper surface of the central bridge element 112 is convex.

One significant difference between the trench cover 110 and the trench cover 10 is the degree to which the outside faces of the sidewalls 116 or 16 are splayed out in the unstressed state. Taking the plane defined by the tips of the teeth 18 or 118 as the criterion, in the trench cover 10 the sidewalls 16 are splayed out at about 22° from the vertical, whereas in the trench cover 110 the sidewalls 116 are splayed out at only about 8° from the vertical. The shape and orientation of the teeth 18 and 118 are also somewhat different, as the teeth 118 are oriented below the horizontal.

Referring now to figure 6 there is shown another alternative trench cover 210, those features which are substantially equivalent to those of the trench cover 10 being referred to by the same reference numerals preceded by a 2. In particular it comprises a central bridge element 212 and edge strips 213 to define the upper surface, and also comprises two sidewalls 216 that project from the underside, one at either side of the central bridge element 212. The outer face 60 of each sidewall 216 is flat. The upper surface of the trench cover 210, apart from the ends of the edge strips 213, is covered by triangular ridges 214 each of height about 2 or 3 mm forming a continuous zigzag shape in elevation. There is a triangular aperture 219 within each sidewall 216.

The trench cover 210 can be used to cover a trench 20 in the same way as described above, although this is not shown, by squeezing the sidewalls 216 together until the separation between their outer faces 60 matches the width of the trench 20. The trench cover 210 is pushed into the trench 20 so that the outer faces 60 abut the side wall of the trench 20 and the edge strips 213 are bent slightly upwards to rest on the ground adjacent to the trench 20. Hence the central bridge element 212 is bent upward so the upper surface of the central bridge element 212 is convex.

It will be appreciated that in this case the sidewalls 216 are of substantially triangular shape in elevation, so that the overall thickness of the central bridge element 212 decreases substantially linearly to a minimum at the middle of the trench cover 210. Although this trench cover 210 can be used in substantially the same way as the trench covers 10 and 110, as the middle of the trench cover 210 will be bent up as the sidewalls 216 are squeezed together, the curvature will tend to be more abrupt at the middle of the trench cover 210. The lack of teeth on the outer faces 60 also provides somewhat less ability to adapt to variations in the width of a trench 20. In this example the outer faces 60 of the sidewalls 216 are splayed out at about 10° from the vertical.

It will be appreciated that the degree to which the outer faces of the sidewalls 16 or 116, or the outer faces 60 of the sidewalls 216, are splayed out in the unstressed state may be different from the values mentioned above. For example the outer faces of the sidewalls 16 or 116 or 216 may be splayed out from the vertical by up to 30°, or alternatively they may indeed be vertical, and so not splayed out at all, in the unstressed state. However, in some cases it may be preferable for the sidewalls 16 or 116 or 216 to be splayed out at an angle between 5° and 25° from the vertical.

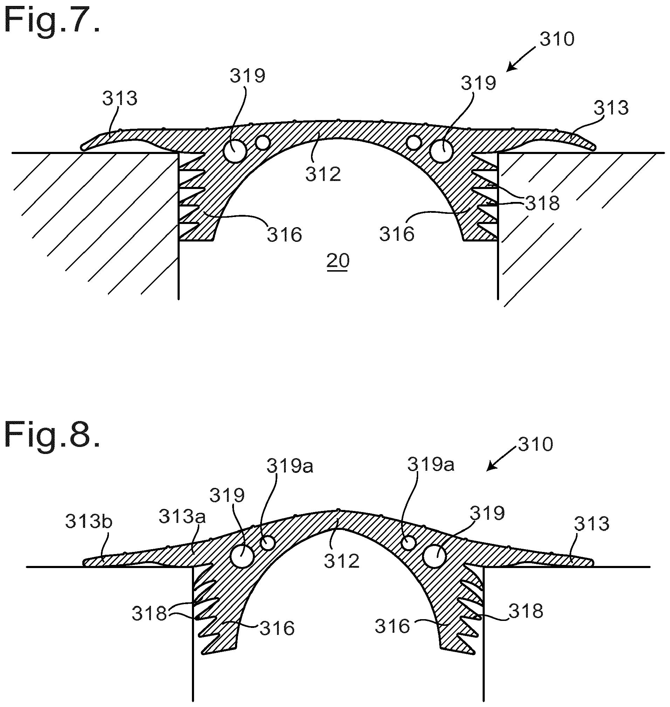

Referring now to figures 7 and 8, there is shown an alternative trench cover 310, the features of which are substantially the same as those of the trench cover 10, being referred to by the same reference numerals preceded by a 3. In particular it comprises a central bridge element 312 and edge strips 313 to define the upper surface, and also comprises two sidewalls 316 that project from the underside, one at either side of the central bridge element 312. The outer face of each sidewall defines five triangular teeth 318. As described above, in its unstressed state the outer face of each sidewall is splayed slightly outwards.

The trench cover 310 can be used to cover a trench 20 in the same way as described above, by squeezing the sidewalls 316 together until the separation between their outer faces matches the width of the trench 20. The trench cover 310 is pushed into the trench 20 so that the teeth 318 abut the side wall of the trench 20 and the edge strips 313 are bent slightly upwards to rest on the ground adjacent to the trench 20. Hence the central bridge element 312 is bent upward so the upper surface of the central bridge element 312 is convex.

When the trench cover 310 is in a somewhat wider trench 20 as shown in figure 7, the upper surface is only slightly convex, and all five teeth 318 are in contact with the wall of the trench 20. When the trench cover 310 is in a somewhat narrower trench 20 as shown in figure 8, the upper surface is convex, curved to a greater extent, and only the upper teeth 318 come into contact with the trench wall. It will be appreciated that in practice a trench may vary in width along its length, so that parts of the trench cover 310 may have the shape shown in figure 7 while other parts have the shape shown in figure 8.

One significant difference between the trench cover 310 and the trench cover 10 is the variation in the shape of the teeth 318: in the trench cover 310 the two teeth 318 nearer the underside of the edge strips 313 are more flexible than those lower down, and so as shown in figure 8 they can bend to a greater extent when in a narrower trench 20, so reducing the curvature of the upper surface. In this embodiment this is achieved by having deeper grooves between these upper teeth 318, but alternatively the increased flexibility could be achieved by having thinner teeth. Another difference is the shape of the edge strips 313: rather than tapering down uniformly to the edge of the trench cover 310, they have a first section 313a that tapers rapidly, and then an edge portion 313b which is thin and of substantially uniform thickness and more flexible than the first section 313a. When in a wider trench as shown in figure 7 the edge portion 313b curves down into contact with the ground surface along its outer edge, but when in a narrower trench as shown in figure 8 the edge portion 313b can readily bend upward so as to conform to the level of the ground. Another difference is the provision of two holes 319 near the top of each sidewall 316, to increase lateral flexibility.

Other variations and modifications will be apparent to the skilled person. Such variations and modifications may involve equivalent and other features that are already known and which may be used instead of, or in addition to, features described herein. Features that are described in the context of separate embodiments may be provided in combination in a single embodiment. Conversely, features that are described in the context of a single embodiment may also be provided separately or in any suitable sub-combination.

It should be noted that the term "comprising" does not exclude other elements or steps, the term "a" or "an" does not exclude a plurality, a single feature may fulfil the functions of several features recited in the claims and reference signs in the claims shall not be construed as limiting the scope of the claims. It should also be noted that the Figures are not necessarily to scale; emphasis instead generally being placed upon illustrating the principles of the present invention.

## Claims

1. A trench cover to cover a trench, the trench cover comprising a length of flexible resilient material having a substantially constant cross-sectional shape along its length, the shape defining a central bridge element between edge strips that together define an upper surface, and the shape also defining two sidewalls projecting from the underside, one at either side of the central bridge element, the sidewalls having an outer surface adapted to abut a side of the trench, and the separation between the outer surfaces of the sidewalls when the trench cover is in an uncompressed state being at least as much as the width of the trench.

2. A trench cover as claimed in claim 1 wherein the thickness of the central bridge element gradually varies across its width, being least at the middle of the trench cover, and increasing to the sidewalls.

3. A trench cover as claimed in claim 2 wherein the variation in thickness is such that the underside of the central bridge element defines a concave curve.

4. A trench cover as claimed in claim 2 wherein the variation in thickness of the central bridge element is a linear decrease down to a minimum thickness portion at the middle of the trench cover.

5. A trench cover as claimed in any one of the preceding claims wherein the outer surfaces of the sidewalls define grooves.

6. A trench cover as claimed in claim 5 wherein the grooves form a zigzag or sawtooth shape at the outer surface of the sidewall.

7. A trench cover as claimed in claim 6 wherein the grooves define teeth shaped such that teeth at different positions on the outer surfaces are of different flexibility.

8. A trench cover as claimed in any one of the preceding claims wherein the upper surface is substantially smooth.

9. A trench cover as claimed in claim 8 wherein the upper surface defines spaced apart ridges less than 1 mm high to provide a nonslip walking surface.

10. A trench cover as claimed in any one of claims 1 to 7 wherein the upper surface defines ridges more than 1 mm high that cover substantially the whole of the upper surface.

11. A trench cover as claimed in any one of the preceding claims wherein the flexible resilient material is a thermoplastic elastomer.

12. A trench cover as claimed in claim 11 wherein the flexible resilient material is a blend of ethylene propylene rubber with polypropylene.

13. A trench cover as claimed in any one of the preceding claims wherein the edge strips taper in thickness down to a thin edge of thickness less than 2 mm.

14. A trench cover as claimed in any one of the preceding claims wherein the edge strips have an inner tapering portion, and then an outer flexible portion of substantially uniform thickness.

15. A trench cover as claimed in any one of the preceding claims wherein the trench cover defines a hole or aperture near the top of each sidewall, into which a dowel can be inserted, so that the ends of successive trench covers can be linked together by the dowels.
